(19) Europäisches Patentamt
European Patent Office
Office européen des brevets

(11) EP 4 209 526 A1

(12) EUROPEAN PATENT APPLICATION
published in accordance with Art. 153(4) EPC

(43) Date of publication:
12.07.2023 Bulletin 2023/28

(21) Application number: 21864674.3

(22) Date of filing: 02.09.2021

(51) International Patent Classification (IPC):
*C08G 18/38* (2006.01) *C08L 75/04* (2006.01)

(52) Cooperative Patent Classification (CPC):
C08G 18/38; C08L 75/04

(86) International application number:
PCT/KR2021/011835

(87) International publication number:
WO 2022/050715 (10.03.2022 Gazette 2022/10)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 03.09.2020 KR 20200112395

(71) Applicant: SKC Co., Ltd.
Suwon-si, Gyeonggi-do 16336 (KR)

(72) Inventors:
- PAI, Jae Young
  Suwon-si, Gyeonggi-do 16338 (KR)
- MYUNG, Jung Hwan
  Suwon-si, Gyeonggi-do 16338 (KR)
- KIM, Jeong Moo
  Suwon-si, Gyeonggi-do 16338 (KR)
- HAN, Hyuk Hee
  Suwon-si, Gyeonggi-do 16338 (KR)
- YOU, Kyeong Hwan
  Suwon-si, Gyeonggi-do 16338 (KR)

(74) Representative: Stolmár & Partner
Patentanwälte PartG mbB
Blumenstraße 17
80331 München (DE)

# (54) POLYTHIOL COMPOSITION AND OPTICAL POLYMERIZABLE COMPOSITION COMPRISING SAME

(57) A polythiol composition according to exemplary embodiments includes: a polythiol-based compound; and a benzyl halide-based reaction regulator in an amount of 10 ppm to 2,000 ppm based on a weight of the polythiol-based compound. The reaction rate of the polythiol-based compound and an isocyanate-based compound may be controlled through the reaction regulator to inhibit a generation of stria phenomenon.

EP 4 209 526 A1

## Description

BACKGROUND

1. Field

The present invention relates to a polythiol composition and an optical polymerizable composition ("polymerizable composition for an optical material") including the same. More particularly, the present inventions relates to a polythiol composition including a polythiol-based compound and an additional compound, and a polymerizable composition for an optical material including the same.

2. Description of the Related Art

A polythiol compound is widely used, for example, as a raw material for manufacturing a polyurethane resin. For example, a polythiol compound is used to manufacture an optical lens using a polyurethane resin, and quality such as purity of the polythiol compound as a raw material may directly affect the quality of the optical lens.
For example, a polythiourethane-based compound prepared by reacting a polythiol compound and an isocyanate compound may be used as a base material of the optical lens.
For example, Korean Patent Laid-Open Publication No. 10-1338568 discloses a method for synthesizing a polythiol compound by reacting a polyol compound with thiourea to prepare an isothiouronium salt, and then hydrolyzing it using aqueous ammonia.
Depending on the reactivity of the synthesized polythiol compound with the isocyanate compound, a transparency of the lens may be reduced or optical non-uniformity may be caused. Further, depending on an extent of hydrolysis reaction, the optical properties of the lens may be changed, and yellowing, white turbidity phenomena, and the like may be caused.

SUMMARY

An object according to the exemplary embodiments is to provide a polythiol composition with improved reaction properties and optical properties.
Another object according to exemplary embodiments is to provide a polymerizable composition for an optical material including a polythiol composition having improved reaction properties and optical properties.
A polythiol composition according to exemplary embodiments includes: a polythiol-based compound; and a benzyl halide-based reaction regulator in an amount of 10 to 2,000 ppm based on a weight of the polythiol-based compound.
A polymerizable composition for an optical material according to exemplary embodiments includes: a polythiol-based compound; an isocyanate-based compound; and a benzyl halide-based reaction regulator in an amount of 10 ppm to 2,000 ppm based on a weight of the polythiol-based compound.
In some embodiments, the polythiol-based compound may include at least one selected from the group consisting of a trifunctional polythiol compound represented by Formula 1 below and tetrafunctional polythiol compounds represented by Formulae 2-1 to 2-3 below.

[Formula 1]

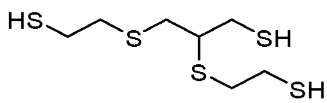

[Formula 2-1]

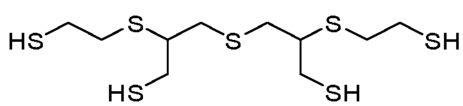

[Formula 2-2]

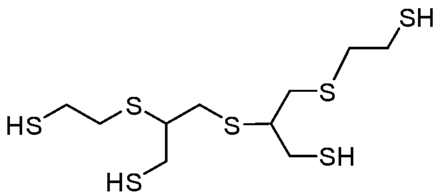

[Formula 2-3]

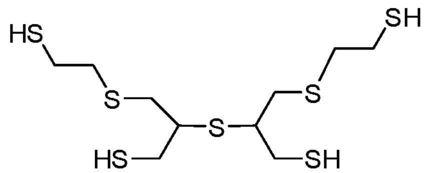

In some embodiments, the reaction regulator may include a benzyl halide or benzyl halide derivative represented by Formula 3 or Formula 4 below:

[Formula 3]

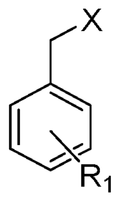

[Formula 4]

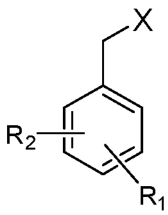

(wherein, in Formulae 3 and 4, X is a halogen element, $R_1$ and $R_2$ are each independently a halogen element, an alkyl group having 1 to 10 carbon atoms, a haloalkyl group having 1 to 10 carbon atoms, a vinyl group, a nitrile group, an isocyanate group or an isocyanatoalkyl group having 1 to 10 carbon atoms, an aldehyde group, a carboxyl group, an ester group having 1 to 10 carbon atoms, an amino group, a nitro group, an allyl group, an aryl group, an alkenyl group having 2 to 10 carbon atoms, an alkynyl group having 2 to 10 carbon atoms, a benzyl group, a peroxy group having 1 to 10 carbon atoms, an alkoxy group having 1 to 10 carbon atoms, an azido group, a diazo group, a nitroso group, a mercapto group, an alkylthio group having 1 to 10 carbon atoms, a sulfonyl group, a sulfino group, a sulfo group, a thiocyanate group, an isothiocyanate group, a carbonothioyl group, a phosphino group or a hydroxyl group).

In some embodiments, the reaction regulator may include at least one selected from the group consisting of (chloromethyl)benzene, 1-chloro-2-(chloromethyl)benzene, 2,4-dichloro-1-(chloromethyl)benzene, 1-(chloromethyl)-4-(trifluoromethyl)benzene, 1-(chloromethyl)-4-vinylbenzene, 1-bromo-4-(chloromethyl)benzene, 4-bromo-1-(chloromethyl)-2-fluorobenzene, 1,3-bis(chloromethyl)-2-fluorobenzene, 1,3-bis(chloromethyl)benzene, 1 -(chloromethyl)-3,5-dimethylbenzene, 1-(chloromethyl)-3-methylbenzene, 3-(chloromethyl)benzonitrile and 1-(chloromethyl)-3-(isocyanatomethyl)benzene.

In some embodiments, a content of the reaction regulator may range from 10 ppm to 1,000 ppm based on the weight of the polythiol-based compound.

According to exemplary embodiments, there is provided an optical product comprising a polythiouretahne resin prepared from the polymerizable composition for an optical material.

According to the above-described embodiments, the polythiol composition may include the benzyl halide-based compound in a predetermined amount as a reaction regulator between the polythiol-based compound and the isocyanate-based compound. A synthesis reaction rate of the polythiourethane resin may be appropriately controlled by the reaction regulator. Accordingly, an optical product such as a lens capable of having uniform optical properties and inhibiting generation of inhomogeneity ("stria") can be obtained using the polythiol composition.

Further, chemical stability of the polythiol composition and the optical product may be improved through the reaction regulator, and thus white turbidity phenomenon of the lens may be effectively inhibited.

According to exemplary embodiments, formation of a disulfide or episulfide compound in the composition may be suppressed through the reaction regulator. Therefore, it is possible to inhibit an occurrence of haze in the polythiol composition and prevent a formation of by-products such as oligomers in the composition.

DETAILED DESCRIPTION OF THE EMBODIMENTS

Hereinafter, embodiments of the present application will be described in detail. In this regard, the present invention may be altered in various ways and have various embodiments, such that specific embodiments will be illustrated in the drawings and described in detail in the present disclosure. However, the present invention is not limited to the specific embodiments, and it will be understood by those skilled in the art that the present invention is to cover all modifications, equivalents, and alternatives falling within the spirit and scope of the present invention.

Unless otherwise defined, all terms including technical and scientific terms used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

According to one aspect of the present application, there is provided a polythiol composition including a polythiol-based compound and a reaction regulator.

The polythiol-based compound may include a trifunctional polythiol compound and/or a tetrafunctional polythiol compound.

A non-limiting example of the trifunctional polythiol compound may include a compound represented by Formula 1 below.

[Formula 1]

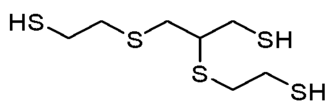

The trifunctional polythiol compound may be synthesized from, for example, a polyol compound obtained through a reaction with 2-mercaptoethanol and epihalohydrin.

After the polyol compound is reacted with thiourea under acidic conditions to produce a thiuronium salt, a trifunctional polythiol compound may be prepared through hydrolysis under basic conditions.

The synthesis process may be exemplified by Scheme 1 below.

[Scheme 1]

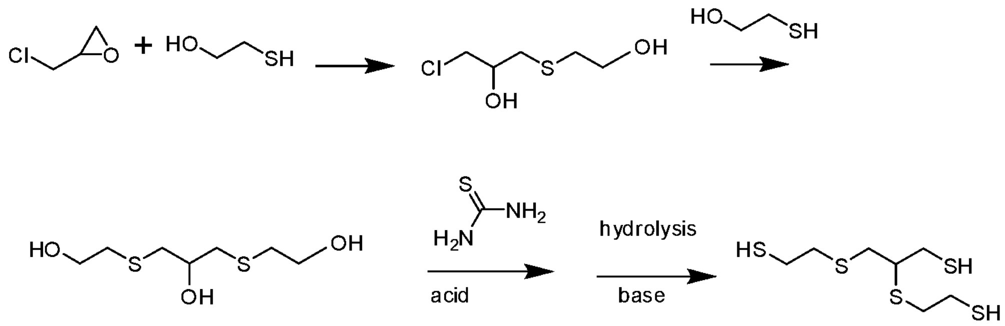


According to one embodiment, in the reaction step of epihalohydrin and 2-mercaptoethanol for synthesizing a trifunctional polythiol compound, a metal-containing catalyst such as sodium hydroxide or potassium hydroxide may be used.

Non-limiting examples of the tetrafunctional polythiol compound may include compounds represented by Formulae 2-1 to 2-3 below.

[Formula 2-1]

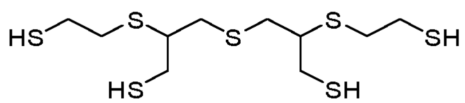

[Formula 2-2]

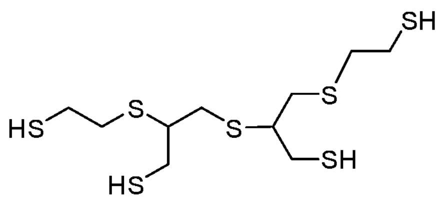

[Formula 2-3]

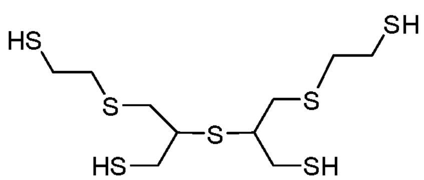

The tetrafunctional polythiol compound may be synthesized from, for example, a polyol compound obtained through a reaction with 2-mercaptoethanol and epihalohydrin.

The polyol compound may be reacted with a metal sulfide to produce a tetrafunctional polyol intermediate. After the tetrafunctional polyol intermediate is reacted with thiourea under acidic conditions to produce a thiuronium salt, a tetrafunctional polythiol compound may be prepared by hydrolysis under basic conditions.

The above synthesis hydrolysis may be exemplified by Scheme 2 below.

[Scheme 2]

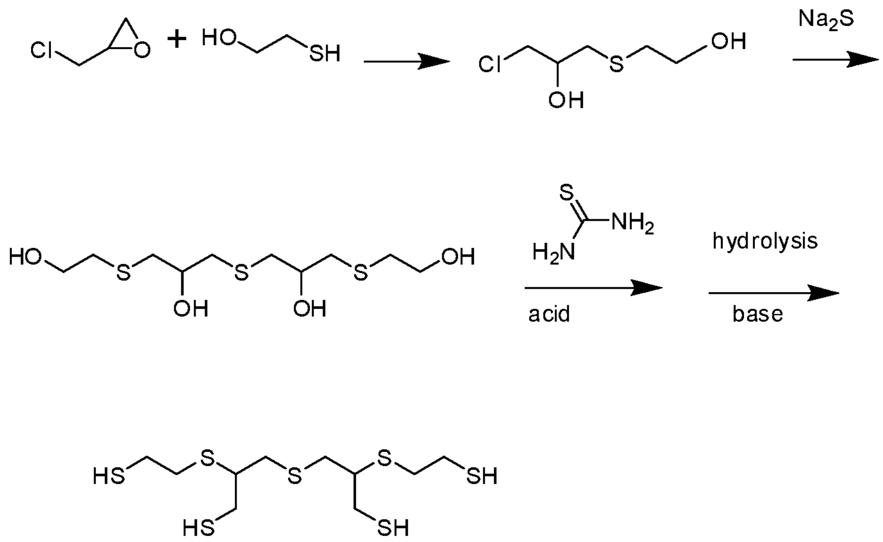


In one embodiment, a basic catalyst may be used in the reaction step of epihalohydrin and 2-mercaptoethanol for synthesizing a tetrafunctional polythiol compound. Examples of the basic catalyst may include tertiary amines such as triethyl amine, quaternary ammonium salts, triphenylphosphine, and trivalent chromium-based compounds.

As exemplified in Schemes 1 and 2 above, epichlorohydrin may be used as epihalohydrin.

In Schemes 1 and 2, reflux under acidic conditions may be used to generate an isothiouronium salt through a reaction with thiurea. In order to form such acidic conditions, acidic compounds such as hydrochloric acid, hydrobromic acid, iodic acid, sulfuric acid, phosphoric acid, and the like may be used.

As described above, after generating the isothiuronium salt, a trifunctional or tetrafunctional polythiol compound may be prepared by hydrolysis under basic conditions. For example, it can be hydrolyzed by adding a basic aqueous solution to a reactive solution containing the isothiouronium salt.

In some embodiments, the basic aqueous solution may include a strong basic compound, for example, alkali metal hydroxide, alkaline earth metal hydroxide and/or alkali metal hydride, such as NaOH, KOH, LiOH, $Ca(OH)_2$, LiH, NaH, etc.

According to exemplary embodiments, an organic solvent may be added before adding the basic aqueous solution. An organic solvent having low reactivity or substantially no reactivity and a boiling point exceeding a thiolation reaction temperature may be used so as to allow a thiolation reaction to proceed stably.

Preferably, in consideration of toxicity from the solvent, toluene may be used as the organic solvent.

The polythiol-based compound obtained as described above may be further purified. For example, by repeatedly performing acid washing and water washing processes, impurities included in the polythiol-based compound may be removed, in addition, the transparency of the optical material prepared from the polythiol composition may be improved. Thereafter, drying, filtration, etc. may be additionally performed.

In one embodiment, an aqueous layer may be separated or removed through layer separation after proceeding with the hydrolysis. Acid washing may be carried out at a temperature of about 20°C to 50 °C, and preferably about 30°C to 40 °C for 20 minutes to 1 hour, or 20 minutes to 40 minutes by introducing an acid solution to the obtained organic phase solution.

After the acid washing, a water washing process may be conducted by adding degassed water having a dissolved oxygen concentration adjusted to 5 ppm or less, preferably 3 ppm or less, and more preferably 2 ppm or less. The water washing process may be conducted at a temperature of about 20°C to 50 °C, preferably about 35°C to 45 °C for 20 minutes to 1 hour, or 20 minutes to 40 minutes. The water washing process may be repeated two or more times, for example, may be conducted 3 times to 6 times.

After the acid washing and water washing process, the residual organic solvent and moisture are removed by heating under reduced pressure, followed by filtering through a filter to obtain a polythiol-based compound with high purity.

According to exemplary embodiments, the polythiol composition may further include a benzyl halide-based reaction regulator. In one embodiment, the polythiol composition may include a benzyl chloride-based reaction regulator.

The reaction regulator may include a benzyl halide or benzyl halide derivative represented by Formula 3 or Formula 4 below.

[Formula 3]

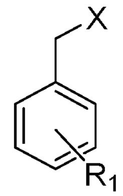

[Formula 4]

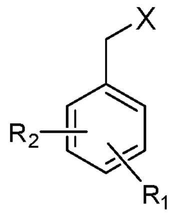

In Formulae 3 and 4, X is a halogen element (F, Cl, Br or I). Further, $R_1$ and $R_2$ may be each independently a halogen, an alkyl group having 1 to 10 carbon atoms, a haloalkyl group having 1 to 3 carbon atoms, a vinyl group, a nitrile group, an isocyanate group, an isocyanatoalkyl group having 1 to 3 carbon atoms, an aldehyde group, a carboxyl group, an ester group having 1 to 10 carbon atoms, an amino group, a nitro group, an allyl group, an aryl group, an alkenyl group having 2 to 10 carbon atoms, an alkynyl group having 2 to 10 carbon atoms, a benzyl group, a peroxy group having 1 to 10 carbon atoms, an alkoxy group having 1 to 10 carbon atoms, an azido group, a diazo group, a nitroso group, a mercapto group, an alkylthio group having 1 to 10 carbon atoms, a sulfonyl group, a sulfino group, a sulfo group, a thiocyanate group, an isothiocyanate group, a carbonothioyl group, a phosphino group or a hydroxyl group.

Examples of the benzyl halide derivative may include: (chloromethyl)benzene, 1-chloro-2-(chloromethyl)benzene, 2,4-dichloro-1-(chloromethyl)benzene, 1-(chloromethyl)-4-(trifluoromethyl)benzene, 1-(chloromethyl)-4-vinylbenzene, 1-bromo-4-(chloromethyl)benzene, 4-bromo-1-(chloromethyl)-2-fluorobenzene, 1,3-bis(chloromethyl)-2-fluorobenzene, 1,3-bis(chloromethyl)benzene, 1-(chloromethyl)-3,5-dimethylbenzene, 1-(chloromethyl)-3-methylbenzene, 3-(chloromethyl)benzonitrile, 1-(chloromethyl)-3-(isocyanatomethyl)benzene and the like. These may be used alone or in combination of two or more thereof.

The reaction regulator may function as a regulator for controlling a reaction rate of the polythiol-based compound included in the polythiol composition with the isocyanate-based compound included in a polymerizable composition for an optical material to be described below.

For example, when the reaction rate between the polythiol-based compound and the isocyanate-based compound is excessively increased, flowability of the synthesized polythiourethane resin is increased, hence causing, for example, non-uniformity in a refractive index of the lens and a generation of stria phenomenon.

However, according to exemplary embodiments, a synthesis reaction rate of the polythiourethane resin may be appropriately suppressed by the reaction regulator included in the polythiol composition. Thereby, an optical product such as a lens capable of having uniform optical properties and inhibiting generation of stria phenomenon may be obtained using the polythiol composition.

Further, the reaction regulator may improve chemical stability of the optical product, thus to effectively inhibit white turbidity phenomenon of the lens.

The reaction regulator may be provided as a disulfide or episulfide compound formation inhibitor in the polythiol composition.

For example, a radical or anion of a thiol group may be generated during synthesis of a polythiol-based compound, and the radicals or anions of the thiol group may react with each other to generate a disulfide by-product. In this case, an amount of high molecular weight by-products such as oligomers in the polythiol composition may be increased to improve a viscosity.

Further, the disulfide or episulfide compound may increase a haze of the polythiol composition, hence causing opacity, white turbidity, etc. of the optical lens.

The production of the disulfide or episulfide compound may be promoted under basic conditions. However, according to exemplary embodiments, the composition or an atmosphere for production of the composition may be maintained in an acidic condition by the reaction regulator, and the generation of the disulfide or episulfide compound

may be suppressed.

Therefore, even when the haze of the polythiol composition is reduced and a separate filtering process to remove the haze of the polythiol composition is omitted, white turbidity and opacity phenomena of the optical lens may be sufficiently inhibited.

Further, high molecular weight by-products such as oligomers in the polythiol composition are reduced, thereby inhibiting an increase in the composition viscosity, and an efficiency of urethane reaction with an isocyanate compound may also be improved.

In some embodiments, a content of the disulfide or episulfide compound in the polythiol composition may be 1% by weight ("wt.%") or less, preferably 0.1 wt.% or less, and more preferably 0.01 wt.% or less, based on the weight of the polythiol-based compound.

According to exemplary embodiments, a content of the reaction regulator may be in a range of 10 ppm to 2,000 ppm based on the weight of the polythiol-based compound.

Within the above range, a yellowing phenomenon caused by a decrease in a purity of the polythiol composition is inhibited, while maintaining an appropriate reaction rate of the synthesis of the polythiourethane resin, thereby preventing stria and white turbidity of the optical product.

Further, the generation of by-products such as disulfide or episulfide compound may be suppressed, thereby improving the purity and yield of the polythiourethane resin.

In a preferred embodiment, the content of the reaction regulator may be in a range of 10 ppm to 1,000 ppm based on the weight of the polythiol-based compound. More preferably, the content of the reaction regulator may be in a range of 10 ppm to 500 ppm, or 10 ppm to 300 ppm based on the weight of the polythiol-based compound.

In some embodiments, a strong basic compound may be used during the hydrolysis reaction under the above-described basic conditions. For example, when toluene is used as the organic solvent, benzyl halide is generated by a side reaction of toluene and may be added to the reaction regulator. In this case, the content of the reaction regulator may exceed a predetermined range.

However, for example, using the above-described strong basic compound instead of the weakly basic compound such as ammonia, amine, pyridine, etc. may sufficiently remove the benzyl halide caused by the side reaction of toluene through hydrolysis. Therefore, while maintaining the content of the reaction regulator in the target range, it is possible to effectively implement the above-described inhibition of stria and improvement of storage.

In one embodiment, as the strong basic compound, a basic compound having a $pK_b$ value of 4 or less measured at 25 °C may be used.

According to one aspect of the present application, there is provided a polymerizable composition for an optical material including the above-described polythiol composition.

The polymerizable composition for an optical material may include the polythiol composition and an isocyanate-based compound.

The isocyanate-based compound may include a compound that is useable as a monomer for synthesizing polythiourethane. In a preferred embodiment, the isocyanate-based compound may include 1,3-bis(isocyanatomethyl)cyclohexane, hexamethylene diisocyanate, isophorone diisocyanate, xylene diisocyanate, toluene diisocyanate and the like. These may be used alone or in combination of two or more thereof.

The polymerizable composition for an optical material may further include additives such as a release agent, a reaction catalyst, a thermal stabilizer, an ultraviolet absorber, a bluing agent and the like.

Examples of the release agent may include a fluorine-based nonionic surfactant having a perfluoroalkyl group, a hydroxyalkyl group or a phosphoric acid ester group; a silicone-based nonionic surfactant having a dimethylpolysiloxane group, a hydroxyalkyl group or a phosphoric acid ester group; alkyl quaternary ammonium salts such as trimethylcetyl ammonium salt, trimethylstearyl, dimethylethylcetyl ammonium salt, triethyldodecyl ammonium salt, trioctylmethyl ammonium salt and diethylcyclohexadodecyl ammonium salt; acidic phosphoric acid ester and the like. These may be used alone or in combination of two or more thereof.

As the reaction catalyst, a catalyst used in the polymerization reaction of the polythiourethane resin may be used. For example, dialkyltin halide catalysts, such as dibutyltin dichloride and dimethyltin dichloride; dialkyltin dicarboxylate catalysts such as dimethyltin diacetate, dibutyltin dioctanoate, and dibutyltin dilaurate; dialkyltin dialkoxide catalysts such as dibutyltin dibutoxide and dioctyltin dibutoxide; dialkyltin dithio alkoxide catalysts such as dibutyltin di(thiobutoxide); dialkyltin oxide catalysts such as di(2-ethylhexyl)tin oxide, dioctyltin oxide, and bis(butoxydibutyltin)oxide; dialkyltin sulfide catalysts, and the like may be used. These may be used alone or in combination of two or more thereof.

As examples of the ultraviolet absorber, benzophenone-based, benzotriazole-based, salicylate-based, cyanoacrylate-based, oxanilide-based compounds, and the like may be used. As examples of the thermal stabilizer, metal fatty acid salt-based, phosphorus-based, lead-based, organotin-based compounds, and the like may be used. These may be used alone or in combination of two or more thereof.

The bluing agent may be included as a color control agent of the optical material prepared from the polythiourethane resin. For example, the bluing agent may have an absorption band in a wavelength band from orange to

yellow in a visible light region.

Examples of the bluing agent may include a dye, a fluorescent whitening agent, a fluorescent pigment, an inorganic pigment, and the like, and may be appropriately selected according to physical properties or resin color required for the optical product to be manufactured. When a dye is used as the bluing agent, for example, a dye having a maximum absorption wavelength of 520 nm to 600 nm, and preferably 540 nm to 580 nm may be used. Preferably, anthraquinone-based dyes may be used.

A polythiourethane resin may be produced through a polymerization reaction of the polythiol-based compound included in the polythiol composition with the isocyanate-based compound, and the polymerization reaction rate may be adjusted or controlled through the action of the reaction regulator included in the polythiol composition.

Accordingly, it is possible to prevent yellowing or white turbidity phenomenon, to inhibit the generation of stria, and to manufacture an optical product in which uniform and improved optical properties are maintained for a long period of time.

In some embodiments, based on a total weight of the polymerizable composition for an optical material, the polythiol-based compound may be included in a content of about 40 wt.% to 60 wt.% and the isocyanate-based compound may be included in a content of about 40 wt.% to 60 wt.%, while the additive may be included in a content of about 0.01 wt.% to 1 wt.%. As described above, the benzyl halide-based reaction regulator may be included in an amount of about 10 ppm to 2,000 ppm based on the weight of the polythiol-based compound. In some embodiments, the benzyl halide-based reaction regulator may be included in an amount of about 5 ppm to 1,000 ppm based on the total weight of the polymerizable composition for an optical material.

As described above, the reaction regulator may be included in the polythiol composition, therefore, may be contained in the polymerizable composition for an optical material along with the polythiol composition. In one embodiment, the reaction regulator may be added to the composition including the isocyanate-based compound thus to be contained in the polymerizable composition for an optical material. In one embodiment, the reaction regulator may be mixed with a polythiol-based compound and an isocyanate-based compound thus to be contained in the polymerizable composition for an optical material.

In some embodiments, a reaction rate of the optical composition involved in Mathematical Equation 1 to be described below may be maintained in a range of 0.17 to 0.30 by the reaction regulator. For example, when a trifunctional polythiol compound is used, the reaction rate may be maintained in a range of 0.24 to 0.30, and preferably 0.27 to 0.30. When a tetrafunctional polythiol compound is used, the reaction rate may be maintained in a range of 0.17 to 0.25, and preferably 0.20 to 0.24.

According to one aspect of the present application, an optical product manufactured using the above-described polymerizable composition for an optical material may be provided.

For example, after degassing the polymerizable composition for an optical material under reduced pressure, the resultant composition may be injected into a mold for molding an optical material. Mold injection may be performed, for example, in a temperature range of 20 °C to 40 °C, and preferably 20°C to 35 °C.

After the mold injection, the temperature may be gradually increased, thereby allowing a polymerization reaction of the polythiourethane resin to proceed. The polymerization temperature may range from 20 °C to 150 °C, and preferably 25 °C to 125 °C. For example, the maximum polymerization temperature may range from 100°C to 150 °C, preferably 110°C to 140 °C, and more preferably 115°C to 130 °C.

The temperature increase rate may be 1 °C/min to 10 °C/min, preferably 3 °C/min to 8 °C/min, and more preferably 4 °C/min to 7 °C/min. The polymerization time may be 10 hours to 20 hours, and preferably from 15 hours to 20 hours.

For example, a lens having uniform optical properties and mechanical properties can be easily obtained by appropriately controlling the reaction rate within the above temperature range.

After completion of polymerization, the polymerized polythiourethane resin may be separated from the mold to obtain an optical product. In one embodiment, after separation from the mold, a curing process may be further conducted. The curing process may be conducted in a range of 100°C to 150 °C, preferably 110 °C to 140 °C, more preferably 115°C to 130 °C for about 1 hours to 10 hours, preferably 2 hours to 8 hours, and more preferably 3 hours to 6 hours.

The optical product may be manufactured in the form of a spectacle lens, a camera lens, a light emitting diode, etc. according to a shape of the mold.

The refractive index of the optical product may be adjusted according to the type and/or content ratio of the polythiol-based compound and the isocyanate-based compound used in the polymerizable composition for an optical material. For example, the refractive index of the optical product may be adjusted in a range of 1.56 to 1.78, 1.58 to 1.76, 1.60 to 1.78, or 1.60 to 1.76, and preferably in a range of 1.65 to 1.75 or 1.69 to 1.75.

A color index (yellowness index (YI)) of the optical product according to Equation 1 which will be described below may be 24 or less (e.g., 20 to 24), preferably 23 or less, and more preferably 22 or less, or 21 or less.

The optical product may be improved by further conducting surface treatment such as anti-fouling, color imparting, hard coat, surface polishing, hardness strengthening and the like.

Hereinafter, embodiments provided in the present application will be further described with reference to specific experimental examples. However, the following experimental examples only illustrate the present invention and are not intended to limit the appended claims, and those skilled in the art will obviously understand that various alterations and modifications are possible within the scope and spirit of the present invention. Such alterations and modifications are duly included in the appended claims.

## Preparative Examples

### 1) Preparative Example 1: Synthesis of trifunctional polythiol-based compound

Into a reactor, 200 parts by weight ("wt. parts") of 2-mercaptoethanol, 200 wt. parts of degassed water (dissolved oxygen concentration of 2 ppm), and 61.4 wt. parts of sodium hydroxide were added. In the reactor, 118.4 wt. parts of epichlorohydrin was slowly added dropwise at 9 °C to 13 °C and stirred for 3 hours.

Then, 360.5 wt. parts of thiourea and 666.8 wt. parts of hydrochloric acid having a purity of 36% were added, and stirred for 3 hours while refluxing at 110 °C, such that a thiuronium chloride reaction was proceeded.

After cooling the obtained reaction solution to 45 °C, 589.7 wt. parts of toluene was added and cooled to 26 °C again, and 829 wt. parts of 33 wt.% sodium hydroxide was added over 25 minutes at 25°C to 45 °C, followed by conducting hydrolysis at 40 °C to 60 °C for 3 hours.

Then, after performing layer separation for 1 hour, the aqueous layer was discarded, 234 wt. parts of 36% hydrochloric acid was added to the obtained toluene solution, and acid washing was conducted once at 33°C to 40 °C for 30 minutes. After acid washing, 530 wt. parts of degassed water (dissolved oxygen concentration of 2 ppm) was added, and washing was conducted 4 times at 35°C to 45 °C. each washing was conducted for 30 minutes. After removing toluene and residual moisture under heating and reduced pressure, 260 wt. parts of the trifunctional polythiol compound represented by Formula 1 was obtained by filtration under reduced pressure through a PTFE type membrane filter.

### 2) Preparative Example 2: Synthesis of tetrafunctional polythiol-based compound

After introducing 60.0 wt. parts of water, 0.3 wt. parts of triethylamine and 73.0 wt. parts of 2-mercaptoethanol into a reactor, a temperature of the reactor was lowered to 0 °C, and 88.2 wt. parts of epichlorohydrin was slowly added dropwise at a temperature of 15 °C or lower, and then further stirred at 30 °C for 3 hours. 145.8wt. parts of 25% aqueous sodium sulfide solution was slowly added dropwise at 20 °C to 25 °C, followed by stirring for additional 3 hours.

Then, 473.2 wt. parts of 36% hydrochloric acid and 177.8 wt. parts of thiourea were introduced, and stirred for 3 hours while refluxing at 110 °C, such that a thiuronium salt reaction was proceeded.

After the obtained reaction solution was cooled to 50 °C, 305.6 wt. parts of toluene and 332.6 wt. parts of 50% NaOH were added, and then hydrolysis was conducted at 40 °C to 60 °C for 3 hours.

Then, the water layer was discarded after performing layer separation for 1 hour, and 120 wt. part of 36% hydrochloric acid was added to the obtained toluene solution, followed by acid washing once at 33 °C to 40 °C for 30 minutes. After acid washing, 250 wt. parts of degassed water (dissolved oxygen concentration of 2 ppm) was added, and washing was conducted 4 times at 35 to 45 °C. each washing was conducted for 30 minutes. After removing toluene and residual moisture under heating and reduced pressure, it was filtered under reduced pressure through a PTFE type membrane filter thus to obtain 140 wt. parts of the tetrafunctional polythiol compound represented by the above Formula 2-1.

## Examples and Comparative Examples

Polythiol compositions of examples and comparative examples were prepared by adding benzyl chloride as a reaction regulator in an amount relative to the polythiol-based compound shown in Table 1 below.

## Preparation of polymerizable composition for an optical material and manufacturing of lens

1) After receiving each of the polythiol compositions of the examples and comparative examples so as to contain 48.0 wt. parts of the trifunctional polythiol of Preparation Example 1, the received composition was uniformly admixed with 52.0 wt. parts of xylene diisocyanate, 0.012 wt. parts of dibutyltin chloride and 0.1 wt. parts of phosphoric acid ester release agent produced by ZELEC® UN tepan. Thereafter, a defoaming process was conducted at 600 Pa for 1 hour to prepare a polymerizable composition for an optical material.

Then, the composition filtered through a 3 μm Teflon filter was injected into a mold provided with a glass mold and a tape. A temperature of the mold was slowly increased from 25 °C to 120 °C at a rate of 5°C/min, and polymerization was performed at 120 °C for 18 hours. After the polymerization was completed, the mold was separated, followed by

further curing the product at 120 °C for 4 hours to manufacture a lens sample.

2) After receiving each of the polythiol compositions of the examples and comparative examples so as to contain 49.0 wt. parts of the tetrafunctional polythiol of Preparation Example 2, the received composition was uniformly admixed with 51.0 wt. parts of xylene diisocyanate, 0.012 wt. parts of dibutyltin chloride, and 0.1 wt. parts of phosphoric acid ester release agent produced by ZELEC® UN Stepan Corporation. Thereafter, a defoaming process was conducted at 600 Pa for 1 hour to prepare a polymerizable composition for an optical material.

Then, the composition filtered through a 3 μm Teflon filter was injected into a mold provided with a glass mold and a tape. A temperature of the mold was slowly increased from 25 °C to 120 °C at a rate of 5°C/min, and polymerization was performed at 120 °C for 18 hours. After the polymerization was completed, the mold was separated followed by further curing the product at 120 °C for 4 hours to manufacture a lens sample.

## Experimental Examples

### (1) Evaluation of storage stability

After storing each of the polythiol compositions of the examples and comparative examples at 45 °C for 1 year, the composition stock solution was visually observed and evaluated as follows.

◦: Completely transparent
△:Yellowing phenomenon observed
×: Haze (stria) pattern observed

### (2) Evaluation of stria

As described above, a lens sample having a diameter of 75 mm and -4.00D was prepared using the polymerizable composition according to each of the examples and comparative examples. A light from a mercury lamp light source was transmitted through the prepared lens sample, and the transmitted light was projected on a white plate to determine the presence or absence of stria according to the presence or absence of contrast. Standards for evaluation are as follows.

◦: Stria not observed
△: Fine partial stria observed
x: Stria clearly observed visually

### (3) Evaluation of white turbidity of the lens

For the lens samples of the examples and comparative examples prepared as described above, each sample was irradiated with right beams from a projector in a dark room, and it was visually confirmed whether the lens had haze or an opaque material.

Standards for evaluation are as follows.

◦: No haze
△: Partial haze observed
x: Haze clearly observed as a whole

### (4) Measurement of polymerization reaction rate (reactivity slope)

Using a non-contact viscometer of EMS-1000 (KEM), the standard viscosity (Standard cps) was first confirmed with a viscosity standard solution (Brookfield, 1000 cps, 25 °C). Thereafter, the viscosity was measured at 10 °C for 24 hours for the polymerizable compositions according to the examples and comparative examples, respectively. Using the measured values, mathematical formulation ("mathematization") was conducted with an X-axis as a time and a Y-axis as a viscosity while converting the Y-axis in a logarithmic scale as shown in Equation 1 below, and then the reaction rate was derived therefrom.

[Mathematical Equation 1]

$$Y = a \times \exp(b \times X)$$

In Mathematical Equation 1, 'a' value represents an initial viscosity (cps) while 'b' value represents the reaction rate, the measured value was expressed by rounding to the two decimal places of the measured value.

**(5) Measurement of color index (yellow index (YI))**

For the lens samples of the examples and comparative examples, YI was measured respectively using a colorimeter (Shinko, Colormate). Specifically, a lens sample having a thickness of 9 mm and φ 75 mm was prepared and chromaticity coordinates x and y were measured. YI was calculated by Equation 1 below based on the measured values of x and y.

[Equation 1]

$$YI = (234 \times x + 106 \times y + 106)/y \qquad (1)$$

Evaluation results are shown together in Table 1 below.

[TABLE 1]

| | Polythiol | Content of reaction regulator (ppm) | Storage stability | Stria | White turbidness | Reaction rate | YI |
|---|---|---|---|---|---|---|---|
| Example 1 | Preparative Example 2 (Tetrafunctional) | 10 | ○ | ○ | ○ | 0.24 | 21 |
| Example 2 | | 50 | ○ | ○ | ○ | 0.22 | 21 |
| Example 3 | | 300 | ○ | ○ | ○ | 0.20 | 21 |
| Example 4 | | 1000 | ○ | ○ | ○ | 0.18 | 22 |
| Example 5 | | 2000 | ○ | ○ | ○ | 0.17 | 23 |
| Example 6 | Preparative Example 1 (Trifunctional) | 10 | ○ | ○ | ○ | 0.30 | 21 |
| Example 7 | | 50 | ○ | ○ | ○ | 0.28 | 21 |
| Example 8 | | 300 | ○ | ○ | ○ | 0.27 | 22 |
| Example 9 | | 1000 | ○ | ○ | ○ | 0.25 | 21 |
| Example 10 | | 2000 | ○ | ○ | ○ | 0.24 | 23 |
| Comparative Example 1 | Preparative Example 2 (Tetrafunctional) | 0 | × | × | ○ | 0.30 | 21 |
| Comparative Example 2 | | 5 | × | △ | ○ | 0.28 | 21 |
| Comparative Example 3 | | 2100 | △ | ○ | △ | 0.16 | 25 |
| Comparative Example 4 | | 2500 | △ | ○ | △ | 0.15 | 26 |
| Comparative Example 5 | | 3000 | △ | ○ | △ | 0.14 | 28 |

(continued)

| | Polythiol | Content of reaction regulator (ppm) | Storage stability | Stria | White turbidness | Reaction rate | YI |
|---|---|---|---|---|---|---|---|
| Comparative Example 6 | Preparative Example 1 (Trifunctional) | 0 | × | × | ○ | 0.37 | 20 |
| Comparative Example 7 | | 5 | × | △ | ○ | 0.35 | 20 |
| Comparative Example 8 | | 2100 | △ | ○ | △ | 0.23 | 25 |
| Comparative Example 9 | | 2500 | △ | ○ | △ | 0.22 | 26 |
| Comparative Example 10 | | 3000 | △ | ○ | △ | 0.21 | 27 |

Referring to Table 1, a highly transparent lens with reduced white turbidity phenomenon while preventing stria phenomenon was manufactured by applying the polythiol compositions of examples including benzyl chloride in the above-described predetermined content range as a reaction regulator.

## Claims

1. A polythiol composition, comprising:

    a polythiol-based compound; and
    a benzyl halide-based reaction regulator in an amount of 10 ppm to 2,000 ppm based on a weight of the polythiol-based compound.

2. The polythiol composition according to claim 1, wherein the polythiol-based compound includes at least one selected from the group consisting of a trifunctional polythiol compound represented by Formula 1 below and tetrafunctional polythiol compounds represented by Formulae 2-1 to 2-3 below:

[Formula 1]

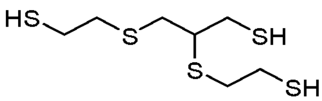

[Formula 2-1]

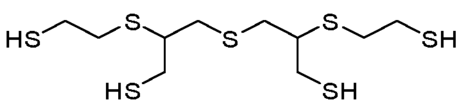

[Formula 2-2]

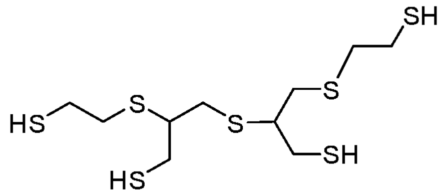

[Formula 2-3]

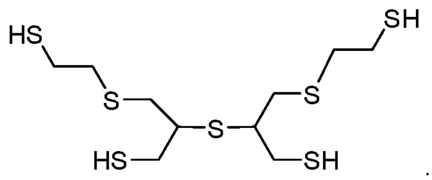

3. The polythiol composition according to claim 1, wherein the reaction regulator includes a benzyl halide or benzyl halide derivative represented by Formula 3 or Formula 4 below:

[Formula 3]

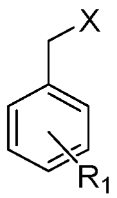

[Formula 4]

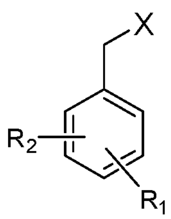

(wherein, in Formulae 3 and 4, X is a halogen element, $R_1$ and $R_2$ are each independently a halogen element, an alkyl group having 1 to 10 carbon atoms, a haloalkyl group having 1 to 10 carbon atoms, a vinyl group, a nitrile group, an isocyanate group or an isocyanatoalkyl group having 1 to 10 carbon atoms, an aldehyde group, a carboxyl group, an ester group having 1 to 10 carbon atoms, an amino group, a nitro group, an allyl group, an aryl group, an alkenyl group having 2 to 10 carbon atoms, an alkynyl group having 2 to 10 carbon atoms, a benzyl group, a peroxy group having 1 to 10 carbon atoms, an alkoxy group having 1 to 10 carbon atoms, an azido group, a diazo group, a nitroso group, a mercapto group, an alkylthio group having 1 to 10 carbon atoms, a sulfonyl group, a sulfino group, a sulfo group, a thiocyanate group, an isothiocyanate group, a carbonothioyl group, a phosphino group or a hydroxyl group).

4. The polythiol composition according to claim 1, wherein the reaction regulator includes at least one selected from the group consisting of (chloromethyl)benzene, 1-chloro-2-(chloromethyl)benzene, 2,4-dichloro-1-(chloromethyl)benzene, 1-(chloromethyl)-4-(trifluoromethyl)benzene, 1-(chloromethyl)-4-vinylbenzene, -bromo-4-(chloromethyl)benzene, 4-bromo-1-(chloromethyl)-2-fluorobenzene, 1,3-bis(chloromethyl)-2-fluorobenzene, 1,3-bis(chloromethyl)benzene, 1-(chloromethyl)-3,5-dimethylbenzene, 1-(chloromethyl)-3-methylbenzene, 3-(chloromethyl)benzonitrile and 1-(chloromethyl)-3-(isocyanatomethyl)benzene.

5. The polythiol composition according to claim 1, wherein a content of the reaction regulator ranges from 10 ppm to 1,000 ppm based on the weight of the polythiol-based compound.

6. A polymerizable composition for an optical material, comprising:

a polythiol-based compound;
an isocyanate-based compound; and
a benzyl halide-based reaction regulator in an amount of 10 ppm to 2,000 ppm based on a weight of the polythiol-based compound.

7. The polymerizable composition for an optical material according to claim 6, wherein the reaction regulator includes a benzyl halide or benzyl halide derivative represented by Formula 3 or Formula 4 below.

[Formula 3]

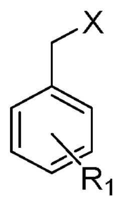

[Formula 4]

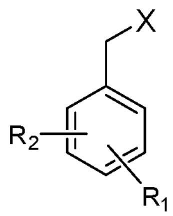

(wherein, in Formulae 3 and 4, X is a halogen element, $R_1$ and $R_2$ are each independently a halogen element, an alkyl group having 1 to 10 carbon atoms, a haloalkyl group having 1 to 10 carbon atoms, a vinyl group, a nitrile group, an isocyanate group or an isocyanatoalkyl group having 1 to 10 carbon atoms, an aldehyde group, a carboxyl group, an ester group having 1 to 10 carbon atoms, an amino group, a nitro group, an allyl group, an aryl group, an alkenyl group having 2 to 10 carbon atoms, an alkynyl group having 2 to 10 carbon atoms, a benzyl group, a peroxy group having 1 to 10 carbon atoms, an alkoxy group having 1 to 10 carbon atoms, an azido group, a diazo group, a nitroso group, a mercapto group, an alkylthio group having 1 to 10 carbon atoms, a sulfonyl group, a sulfino group, a sulfo group, a thiocyanate group, an isothiocyanate group, a carbonothioyl group, a phosphino group or a hydroxyl group).

8. The polymerizable composition for an optical material according to claim 6, wherein the reaction regulator includes at least one selected from the group consisting of (chloromethyl)benzene, 1-chloro-2-(chloromethyl)benzene, 2,4-dichloro-1-(chloromethyl)benzene, 1-(chloromethyl)-4-(trifluoromethyl)benzene, 1-(chloromethyl)-4-vinylbenzene, 1-bromo-4-(chloromethyl)benzene, 4-bromo-1-(chloromethyl)-2-fluorobenzene, 1,3-bis(chloromethyl)-2-fluorobenzene, 1,3-bis(chloromethyl)benzene, 1-(chloromethyl)-3,5-dimethylbenzene, 1-(chloromethyl)-3-methylbenzene, 3-(chloromethyl)benzonitrile and 1-(chloromethyl)-3-(isocyanatomethyl)benzene.

9. The polymerizable composition for an optical material according to claim 6, wherein a content of the reaction regulator ranges from 10 ppm to 1,000 ppm based on the weight of the polythiol-based compound.

10. An optical product comprising a polythiouretahne resin prepared from the polymerizable composition for an optical material according to claim 6.

## INTERNATIONAL SEARCH REPORT

International application No.
**PCT/KR2021/011835**

**A. CLASSIFICATION OF SUBJECT MATTER**

**C08G 18/38**(2006.01)i; **C08L 75/04**(2006.01)i

According to International Patent Classification (IPC) or to both national classification and IPC

**B. FIELDS SEARCHED**

Minimum documentation searched (classification system followed by classification symbols)

C08G 18/38(2006.01); C07C 263/10(2006.01); C07C 265/12(2006.01); C08G 18/76(2006.01); C08G 75/00(2006.01); C08K 3/16(2006.01); G02B 1/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리티올(polythiol), 벤질할라이드(benzyl halide), 이소시아네이트(isocyanate), 광학(optical)

**C. DOCUMENTS CONSIDERED TO BE RELEVANT**

| Category* | Citation of document, with indication, where appropriate, of the relevant passages | Relevant to claim No. |
|---|---|---|
| X | KR 10-2019-0125306 A (MITSUBISHI GAS CHEMICAL COMPANY, INC.) 06 November 2019 (2019-11-06) See claims 1, 3 and 7; and paragraphs [0002]-[0005], [0008], [0037], [0043]-[0052], [0079] and [0087]. | 1-10 |
| A | KR 10-2018-0127517 A (MITSUI CHEMICALS, INC.) 28 November 2018 (2018-11-28) See claims 1-7; and paragraphs [0371] and [0377]. | 1-10 |
| A | KR 10-2016-0143671 A (COVESTRO DEUTSCHLAND AG) 14 December 2016 (2016-12-14) See claims 1-4. | 1-10 |
| A | JP 2003-064146 A (MITSUBISHI GAS CHEM. CO., INC.) 05 March 2003 (2003-03-05) See entire document. | 1-10 |
| A | JP 2002-332350 A (MITSUBISHI GAS CHEM. CO., INC.) 22 November 2002 (2002-11-22) See entire document. | 1-10 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 December 2021** | **10 December 2021** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2021/011835**

| Patent document cited in search report | Publication date (day/month/year) | Patent family member(s) | Publication date (day/month/year) |
|---|---|---|---|
| KR 10-2019-0125306 A | 06 November 2019 | CN 110475796 A | 19 November 2019 |
| | | EP 3597683 A1 | 22 January 2020 |
| | | EP 3597683 A4 | 18 March 2020 |
| | | TW 201840672 A | 16 November 2018 |
| | | US 2020-0223975 A1 | 16 July 2020 |
| | | WO 2018-168419 A1 | 20 September 2018 |
| KR 10-2018-0127517 A | 28 November 2018 | BR 112018074934 A2 | 12 March 2019 |
| | | BR 112018074934 B1 | 28 April 2020 |
| | | CN 109153637 A | 04 January 2019 |
| | | CN 109153637 B | 08 December 2020 |
| | | CN 112409566 A | 26 February 2021 |
| | | CN 112409569 A | 26 February 2021 |
| | | CN 112409570 A | 26 February 2021 |
| | | CN 112480363 A | 12 March 2021 |
| | | CN 112480364 A | 12 March 2021 |
| | | EP 3470393 A1 | 17 April 2019 |
| | | EP 3470393 A4 | 11 March 2020 |
| | | EP 3470393 B1 | 03 March 2021 |
| | | EP 3825301 A1 | 26 May 2021 |
| | | JP 2018-177811 A | 15 November 2018 |
| | | JP 6373536 B1 | 15 August 2018 |
| | | KR 10-1970115 B1 | 17 April 2019 |
| | | KR 10-2019-0129819 A | 20 November 2019 |
| | | TW 201841880 A | 01 December 2018 |
| | | TW I655178 B | 01 April 2019 |
| | | US 10640605 B2 | 05 May 2020 |
| | | US 2019-0292304 A1 | 26 September 2019 |
| | | US 2020-0190249 A1 | 18 June 2020 |
| | | WO 2018-190290 A1 | 18 October 2018 |
| KR 10-2016-0143671 A | 14 December 2016 | CN 106414538 A | 15 February 2017 |
| | | CN 106414538 B | 28 February 2020 |
| | | CN 106459357 A | 22 February 2017 |
| | | CN 106459357 B | 30 July 2019 |
| | | CN 106573881 A | 19 April 2017 |
| | | CN 106573881 B | 16 July 2019 |
| | | EP 3129351 A2 | 15 February 2017 |
| | | EP 3129351 B1 | 10 April 2019 |
| | | EP 3129352 A1 | 15 February 2017 |
| | | EP 3129352 B1 | 15 November 2017 |
| | | EP 3129353 A1 | 15 February 2017 |
| | | HU E035911 T2 | 28 May 2018 |
| | | JP 2017-512881 A | 25 May 2017 |
| | | JP 2017-512883 A | 25 May 2017 |
| | | JP 2017-517487 A | 29 June 2017 |
| | | JP 6710159 B2 | 17 June 2020 |
| | | JP 6810919 B2 | 13 January 2021 |
| | | KR 10-2016-0147802 A | 23 December 2016 |
| | | US 10252988 B2 | 09 April 2019 |
| | | US 10294198 B2 | 21 May 2019 |
| | | US 2017-0029552 A1 | 02 February 2017 |

Form PCT/ISA/210 (patent family annex) (July 2019)

**INTERNATIONAL SEARCH REPORT**
**Information on patent family members**

International application No.
**PCT/KR2021/011835**

| Patent document cited in search report | Publication date (day/month/year) | Patent family member(s) | Publication date (day/month/year) |
|---|---|---|---|
| | | US 2017-0121449 A1 | 04 May 2017 |
| | | US 2017-0210702 A1 | 27 July 2017 |
| | | WO 2015-155365 A2 | 15 October 2015 |
| | | WO 2015-155365 A3 | 30 December 2015 |
| | | WO 2015-155366 A1 | 15 October 2015 |
| | | WO 2015-155367 A1 | 15 October 2015 |
| JP 2003-064146 A | 05 March 2003 | JP 4697374 B2 | 08 June 2011 |
| JP 2002-332350 A | 22 November 2002 | CN 1271121 C | 23 August 2006 |
| | | CN 1462290 A | 17 December 2003 |
| | | EP 1378535 A1 | 07 January 2004 |
| | | EP 1378535 A4 | 05 April 2006 |
| | | EP 1378535 B1 | 11 November 2009 |
| | | JP 2002-302549 A | 18 October 2002 |
| | | JP 3632759 B2 | 23 March 2005 |
| | | JP 3632761 B2 | 23 March 2005 |
| | | KR 10-0868131 B1 | 10 November 2008 |
| | | KR 10-0892194 B1 | 07 April 2009 |
| | | KR 10-2003-0007912 A | 23 January 2003 |
| | | KR 10-2008-0053958 A | 16 June 2008 |
| | | US 2003-0171533 A1 | 11 September 2003 |
| | | US 2005-0261467 A1 | 24 November 2005 |
| | | US 7169845 B2 | 30 January 2007 |
| | | US 7446163 B2 | 04 November 2008 |
| | | WO 02-083763 A1 | 24 October 2002 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 101338568